(19) **Europäisches Patentamt / European Patent Office / Office européen des brevets**

(11) **EP 4 610 158 A1**

(12) **EUROPEAN PATENT APPLICATION**
published in accordance with Art. 153(4) EPC

(43) Date of publication:
03.09.2025 Bulletin 2025/36

(51) International Patent Classification (IPC):
**B63B 35/44** (2006.01)   **B63B 75/00** (2020.01)
**H02S 10/40** (2014.01)

(21) Application number: 23882842.0

(22) Date of filing: 27.07.2023

(52) Cooperative Patent Classification (CPC):
**B63B 35/44; B63B 75/00; H02S 10/40; Y02E 10/50**

(86) International application number:
**PCT/KR2023/010981**

(87) International publication number:
**WO 2024/090735 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 27.10.2022 KR 20220140582

(71) Applicant: POSCO Co., Ltd
Pohang-si, Gyeongsangbuk-do 37859 (KR)

(72) Inventors:
• MOON, Changho
Pohang-si, Gyeongsangbuk-do 37859 (KR)
• LEE, Kyeman
Pohang-si, Gyeongsangbuk-do 37859 (KR)
• KIM, Younghwan
Pohang-si, Gyeongsangbuk-do 37859 (KR)
• JUNG, Yonggyun
Pohang-si, Gyeongsangbuk-do 37859 (KR)

(74) Representative: Nederlandsch Octrooibureau
P.O. Box 29720
2502 LS The Hague (NL)

(54) **FLOATING BODY FOR SOLAR POWER GENERATION SYSTEM, AND SOLAR POWER GENERATION SYSTEM**

(57) A floating body for a photovoltaic power generation system and a photovoltaic power generation system are provided. A floating body for a photovoltaic power generation system according to an embodiment of the present invention includes an upper structure including an installation portion having a flat shape on one side, a lower structure arranged to correspond to the upper structure and including a hemispherical shape convex downward, and a fixing portion for coupling the upper structure and the lower structure.

FIG. 1

## Description

### [Technical Field]

The present invention relates to a floating body for a photovoltaic power generation system and a photovoltaic power generation system.

### [Background Art]

In general, floating offshore photovoltaic power generation systems, compared to onshore or freshwater systems, have the advantages such as being suitable for deep waters, unaffected by the ground, movable and reusable, relatively economical, and quick to install, and having lower construction costs depending on the water depth.

However, unlike freshwater environments, the stability and robustness of offshore photovoltaic power generation systems are significantly related to the sea surface of the offshore area where they are installed, so wave direction, wave height, currents, and the like need to be considered when determining the installation location and orientation.

In particular, due to the significant physical energy fluctuations of the current caused by ocean winds, including typhoons, and tidal phenomena, the entire or part of the floating offshore photovoltaic power generation system frequently moves laterally or vertically, increasing the repetitive fatigue load on the photovoltaic panel module support structure and mooring device, thereby reducing the life of the offshore photovoltaic power generation system.

In addition, ocean pollution has occurred due to stagnant ocean currents on the inner side beneath the offshore photovoltaic power generation system, which is installed over a wide area.

In addition, since the offshore photovoltaic power generation system generally uses a floating body based on plastic materials, there are concerns about environmental hazards and there is a problem that it is easily corroded due to its poor corrosion resistance in seawater environments.

Therefore, there is a need for measures to secure a floating body with excellent corrosion resistance, durability, and impact resistance to overcome these problems.

### [Disclosure]

### [Technical Problem]

The present invention attempts to provide a floating body for a photovoltaic power generation system and a photovoltaic power generation system capable of overcoming corrosion resistance limitations and environmental hazard concerns of a floating body in seawater environments, and maximizing penetration of waves passing through the floating body to prevent ocean pollution caused by stagnant ocean currents beneath the photovoltaic power generation system.

### [Technical Solution]

A floating body for a photovoltaic power generation system according to an embodiment of the present invention includes an upper structure including an installation portion having a flat shape on one side, a lower structure arranged to correspond to the upper structure and including a hemispherical shape convex in a direction away from the installation portion, and a fixing portion configured to couple the upper structure and the lower structure.

The upper structure may have one of a hemispherical shape, a semi-conical shape, or a semi-ellipsoidal shape.

The floating body may further include an upper flange portion extending in an outward direction of the upper structure, and a lower flange portion arranged to correspond to the upper flange portion and extending in an outward direction of the lower structure.

The fixing portion may couple the upper structure and the lower structure by a screw or welding or couple the upper flange portion and the lower flange portion by a bolt or welding.

The upper flange portion may include a first upper groove, and the lower flange portion may include a first lower groove arranged to correspond to the first upper groove.

A first non-metal airtight pad may be arranged between the first upper groove and the first lower groove.

The upper flange portion may include at least one or more second upper grooves on an outer side of the first upper groove, and the lower flange portion may include at least one or more second lower grooves arranged to correspond to the second upper groove.

A second non-metal airtight pad may be arranged between the second upper groove and the second lower groove.

The upper flange portion may include an upper planar portion between the first upper groove and the second upper groove, and the lower flange portion may include a lower planar portion arranged to correspond to the upper planar portion between the first lower groove and the second lower groove.

A third non-metal airtight pad may be arranged between the upper planar portion and the lower planar portion.

Materials of the first non-metal airtight pad, the second non-metal airtight pad, and the third non-metal airtight pad may be composed of silicone.

The installation portion may be provided with a connection portion for connecting one floating body and another floating body adjacent to the one floating body.

The installation portion may include a communication portion configured to communicate with an internal hollow portion of the upper structure, and the communication portion may be provided with a positive pressure applying device for applying a positive pressure to an inside of the upper structure.

The connection portion may include a first installation hole for installing the positive pressure applying device, and a socket portion for installing a connection frame for connection to an adjacent floating body for a photovoltaic power generation system.

The socket portion may be arranged in plurality at intervals set based on the connection portion.

A cross-sectional shape of each of the socket portions may have a trapezoidal shape.

At least one or more roller portions may be installed inside the socket portions to support a mooring device cable passing through the socket portions.

The positive pressure applying device may include an injection pipe connected in communication with the communication portion for injecting a gas for positive pressure application, a valve cap installed on the injection pipe for closing the injection pipe, and a support body coupled to the installation portion to support the injection pipe.

An air or carbon dioxide ($CO_2$) gas may be injected into the injection pipe at a set pressure.

The upper structure and the lower structure may be manufactured from a metal material.

The metal material may be any one material selected from austenitic stainless steel, ferritic stainless steel, or duplex stainless steel.

The upper structure and the lower structure may each include a dimpled portion on a surface.

A height of each of the upper structure and the lower structure may be set smaller than a radius of each of the upper structure and the lower structure.

The socket portion may be manufactured from the same metal material as the upper structure and lower structure.

In addition, a photovoltaic power generation system according to an embodiment of the present invention may include the above-described floating body.

**[Advantageous Effects]**

According to an embodiment of the present invention, it is possible to provide a spherical floating body shape that utilizes a metal material with excellent corrosion resistance, has excellent durability and impact resistance regardless of the material of the floating body or the direction of ocean wind and wave propagation, and ensures airtightness.

Therefore, it is possible to overcome environmental hazard concerns and corrosion resistance limitations in seawater environments of an offshore photovoltaic power generation system based on plastic material, and maximize penetration of waves passing through the floating body to prevent ocean pollution caused by stagnant ocean currents on an inner side beneath the offshore photovoltaic power generation system installed over a wide area.

**[Description of the Drawings]**

FIG. 1 is a schematic perspective view of a coupled floating body for a photovoltaic power generation system according to an embodiment of the present invention.

FIG. 2 is a schematic partially exploded perspective view of the floating body for a photovoltaic power generation system according to an embodiment of the present invention.

FIG. 3 is a cross-sectional view of part A of FIG. 1, wherein (a) illustrates a coupled state of an upper flange portion and a lower flange portion according to a first embodiment, and (b) illustrates a coupled state of the upper flange portion and the lower flange portion according to the first embodiment.

FIG. 4 is a schematic perspective view of a connection portion of the floating body for a photovoltaic power generation system according to an embodiment of the present invention.

FIG. 5 is a cross-sectional view of the connection portion of the floating body for a photovoltaic power generation system according to an embodiment of the present invention, wherein (a) illustrates a trapezoidal cross-sectional shape, (b) illustrates a quadrilateral cross-sectional shape, and (c) illustrates a circular cross-sectional shape.

FIG. 6 is a schematic perspective view of a positive pressure applying device of the floating body for a photovoltaic power generation system according to an embodiment of the present invention.

FIG. 7 is a schematic partially exploded perspective view of a floating body for a photovoltaic power generation system according to another embodiment of the present invention.

FIG. 8 is a graph comparing the number of floating bodies with respect to the submerged volume (submersion rate) of the floating body between a comparative example and an example of the present invention.

**[Mode for Invention]**

In the following detailed description, only certain exemplary embodiments of the present invention have been shown and described, simply by way of illustration. As can be easily understood by one skilled in the art to which the present invention pertains, the exemplary embodiments described below may be modified into various forms without departing from the concept and scope of the present invention. As much as possible, the same or similar parts are indicated using the same reference numerals in the drawings.

The technical terms used herein are set forth only to mention specific exemplary embodiments and are not intended to limit the present invention. Singular forms used herein are intended to include the plural forms as long as phrases do not clearly indicate an opposite meaning. In the present specification, the term "comprising (including)" is intended to embody specific characteristics, regions, integers, steps, operations, elements and/or components, but is not intended to exclude presence or addition of other characteristics, regions, integers, steps, operations, elements, components, and/or groups.

All terms including technical and scientific terms used herein have the same meanings as the meanings generally understood by one skilled in the art to which the present invention pertains. Terms, such as those defined in dictionaries, are to be further interpreted as having meanings consistent with the relevant technical literature and the present disclosure, and are not to be interpreted as having idealized or overly formal meanings unless expressly so defined herein.

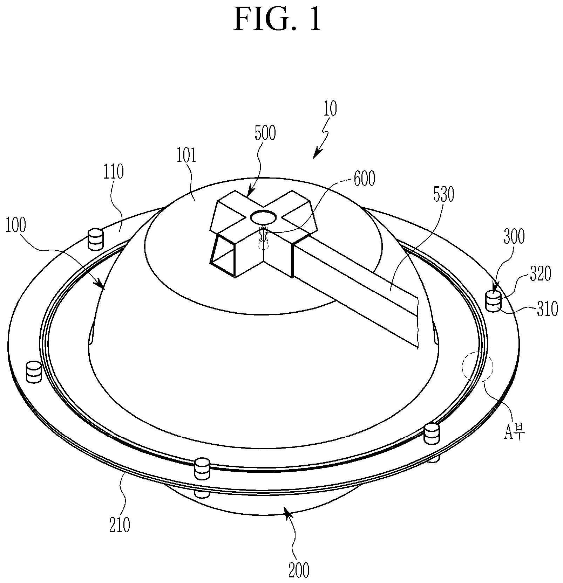

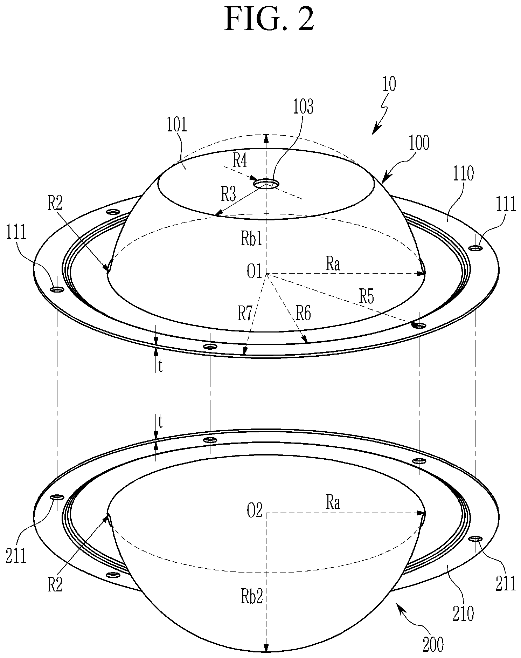

FIG. 1 is a schematic perspective view of a coupled floating body for a photovoltaic power generation system according to an embodiment of the present invention, and FIG. 2 is a schematic partially exploded perspective view of the floating body for a photovoltaic power generation system according to an embodiment of the present invention.

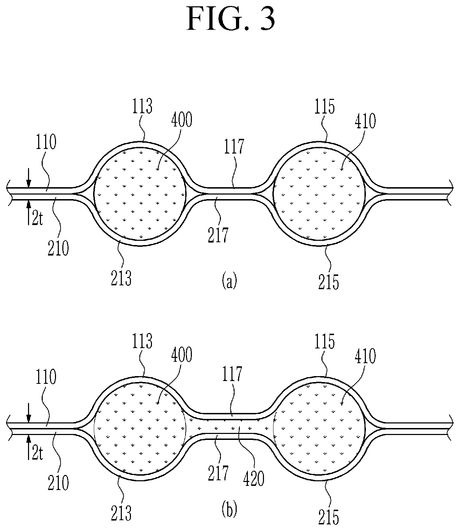

FIG. 3 is a cross-sectional view of part A of FIG. 1, wherein (a) illustrates a coupled state of an upper flange portion and a lower flange portion according to a first embodiment, and (b) illustrates a coupled state of the upper flange portion and the lower flange portion according to the first embodiment.

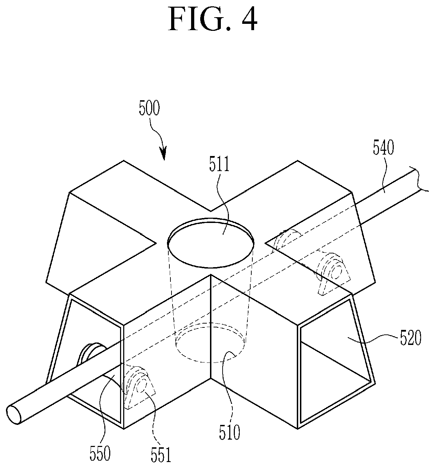

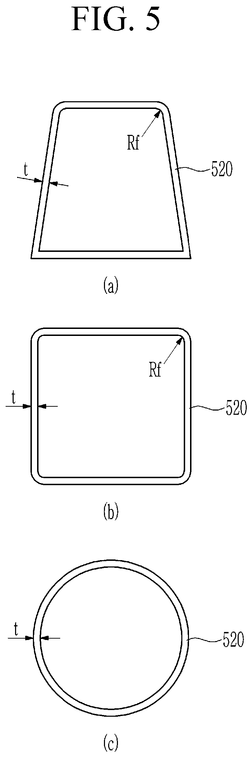

FIG. 4 is a schematic perspective view of a connection portion of the floating body for a photovoltaic power generation system according to an embodiment of the present invention, and FIG. 5 is a cross-sectional view of the connection portion of the floating body for a photovoltaic power generation system according to an embodiment of the present invention, wherein (a) illustrates a trapezoidal cross-sectional shape, (b) illustrates a quadrilateral cross-sectional shape, and (c) illustrates a circular cross-sectional shape.

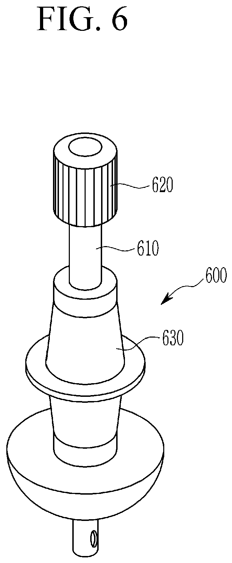

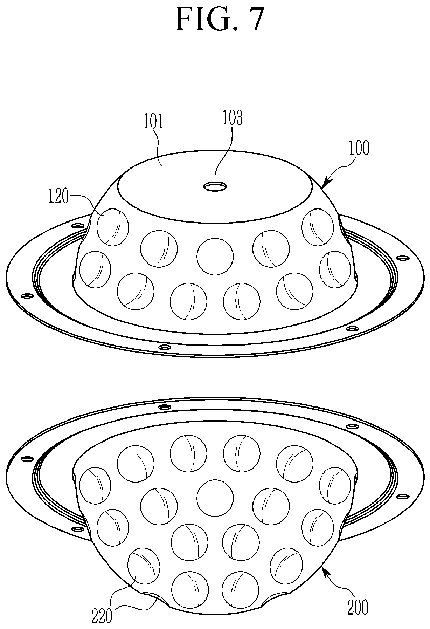

FIG. 6 is a schematic perspective view of a positive pressure applying device of the floating body for a photovoltaic power generation system according to an embodiment of the present invention, and FIG. 7 is a schematic partially exploded perspective view of a floating body for a photovoltaic power generation system according to another embodiment of the present invention.

Referring to FIGS. 1 to 7, a floating body 10 for a photovoltaic power generation system according to an embodiment of the present invention may include an upper structure 100, a lower structure 200, and a fixing portion 300.

The upper structure 100 may include an installation portion 101 having a flat shape on one side, for example, an upper end surface.

In addition, the lower structure 200 may be arranged to correspond to the upper structure 100 and may include a hemispherical shape convex downward (Y direction in FIG. 1), that is, in a direction away from the installation portion 101.

The fixing portion 300 may couple and fix the upper structure 100 and the lower structure 200.

The installation portion 101 may refer to a plane obtained by cutting an upper end portion (top) of the upper structure 100 into a plane parallel to a lower end surface of the upper structure 100.

The upper structure 100 may have a shape selected from a hemispherical shape, a semi-conical shape, a semi-ellipsoidal shape, or the like convex upward (Y direction in FIG. 1), that is, in a direction away from the lower structure 200, allowing water (seawater) to pass smoothly under the influence of external forces.

The lower structure 200 may include a hemispherical shape convex downward, allowing water (seawater) to pass smoothly under the influence of external forces, and provide buoyancy to float on water, thereby enabling the upper structure 100 arranged on top of the lower structure 200 to float above the water surface.

The floating body 10 for a photovoltaic power generation system may have an overall spherical shape formed by the upper structure 100 and the lower structure 200, allowing the incident waves to naturally propagate to an inner side beneath a floating offshore photovoltaic power generation system by generating streamlines (transmitted waves) along a surface of the floating body due to low resistance to external forces such as wind load and wave load at sea.

In addition, the upper structure 100 and the lower structure 200 may be manufactured from metal materials or the like to provide excellent corrosion resistance, including strong resistance to surface corrosion and crevice corrosion in a submerged portion of the floating body.

Examples of such a metal material may include any one material selected from high-corrosion-resistant austenitic stainless steel, high-corrosion-resistant ferritic stainless steel, or high-corrosion-resistant duplex stainless steel.

The upper structure 100 and lower structure 200 of the floating body 10 for a photovoltaic power generation system may be manufactured through metal press working or the like that plastically deforms a metal plate.

A height (Rb1) of the upper structure 100 and a height (Rb2) of the lower structure 200 may be set smaller than a radius (Ra) of each of the upper structure 100 and the lower structure 200, taking into account cold workability, including an elongation of metal.

A lower end portion of the upper structure 100 and an upper end portion of the lower structure 200 may each have a rounded portion R2, which is rounded to prevent cracks from occurring during processing at a portion where the shape changes abruptly, taking into account cold workability, including an elongation of metal.

In addition, the floating body 10 for a photovoltaic power generation system may include an upper flange portion 110 extending in an outward direction of the upper structure 100, and a lower flange portion 210 arranged to correspond to the upper flange portion 110 and extending in an outward direction of the lower structure 200.

The fixing portion 300 may couple the upper structure 100 and the lower structure 200, or couple the upper flange portion 110 and the lower flange portion 210.

The upper flange portion 110 may extend outwardly, i.e., radially, from an outer peripheral surface of the lower end portion of the upper structure 100.

In addition, the lower flange portion 210 may extend outwardly, i.e., radially, from an outer peripheral surface of the upper end portion of the lower structure 200.

The fixing portion 300 may fix the upper structure 100 and the lower structure 200 by welding or by coupling upper threads (not shown) arranged on an inner side or outer side of the lower end portion of the upper structure 100 and lower threads (not shown) corresponding to the upper threads on an outer side or inner side of the upper end portion of the lower structure 200.

In addition, the fixing portion 300 may include a fastening bolt 310 for fastening the upper flange portion 110 and the lower flange portion 210, a nut 320 for fastening with the fastening bolt 310, and the like.

A plurality of the fastening bolts 310 may be coupled at set intervals to the upper flange portion 110 and the lower flange portion 210 to ensure firm connection between the upper flange portion 110 and the lower flange portion 210.

In addition, the upper flange portion 110 may be provided with an upper coupling hole 111 for inserting and coupling the fastening bolt 310, and the lower flange portion 210 may be provided with a lower coupling hole 211 arranged to correspond to the upper coupling hole 111 and for inserting and coupling the fastening bolt 310.

In addition, the upper coupling holes 111 may be arranged at set intervals along a circumferential surface of the upper flange portion 110 on a radius (R5, where R5>Ra) of a set size centered on a central portion O1 of the lower end portion of the upper structure 100.

The lower coupling holes 211 may be arranged at set intervals along a circumferential surface of the lower flange portion 210 on a radius (R5, where R5>Ra) of a set size centered on a central portion O2 of the upper end portion of the lower structure 200.

In addition, the fixing portion 300 may weld and fix an outer surface of the upper flange portion 110 and an outer surface of the lower flange portion 210 without using the fastening bolts 310 and nuts 320.

The upper flange portion 110 may include a first upper groove 113 that is convex upward, and the lower flange portion 210 may include a first lower groove 213 that is concave downward and arranged to correspond to the first upper groove 113.

A first non-metal airtight pad 400 may be arranged between the first upper groove 113 and the first lower groove 213.

Additionally, the upper flange portion 110 may include at least one or more second upper grooves 115 convex upward and provided on an outer side of the first upper groove 113.

The lower flange portion 210 may include a second lower groove 215 that is concave downward and arranged to correspond to the second upper groove 115.

A second non-metal airtight pad 410 may be arranged between the second upper groove 115 and the second lower groove 215.

In addition, the first upper groove 113 and the second upper groove 115 may be arranged at set intervals along the circumferential surface of the upper flange portion 110 on a radius (R6, where R5>R6>Ra) of a set size centered on the center portion 01 of the lower end portion of the upper structure 100.

The first lower groove 213 and the second lower groove 215 may be arranged at set intervals along the circumferential surface of the lower flange portion 210 on a radius (R6, where R5>R6>Ra) of a set size centered on the central portion O2 of the upper end portion of the lower structure 200.

The upper flange portion 110 may include an upper planar portion 117 between the first upper groove 113 and the second upper groove 115, and the lower flange portion 210 may include a lower planar portion 217 arranged to correspond to the upper planar portion 117 between the first lower groove 213 and the second lower groove 215.

A third non-metal airtight pad 420 may be arranged between the upper planar portion 117 and the lower planar portion 217.

Additionally, a thickness (2t+h) of the third non-metal airtight pad 420 may be set to be thicker than a sum (2t) of thicknesses of the upper flange portion 110 and the lower flange portion 210, and thinner than a thickness of the first non-metal airtight pad 400.

The materials of the first non-metal airtight pad 400, the second non-metal airtight pad 410, and the third non-metal airtight pad 420 may be composed of silicone or the like.

The installation portion 101 may be provided with a connection portion 500 for connecting one floating body 10 and another floating body 10 adjacent to the one floating body 10.

The upper structure 100 may include a hollow portion (not shown) with an empty interior, and the lower structure 200 may include a hollow portion (not shown) with an empty interior.

In addition, low-specific-gravity fillers such as styrofoam may be inserted into the hollow portions (not shown) of the upper structure 100 and the lower structure 200 to ensure that the upper structure 100 and the lower structure 200 can float well on water, and oxygen or carbon dioxide may be injected into gaps between the fillers.

A central portion of the installation portion 101 may include a communication portion 103 in communication with the internal hollow portion of the upper structure 100, and the communication portion 103 may be provided with a positive pressure applying device 600 for applying a positive pressure to the inside of the upper structure 100.

The installation portion 101 may have a radius R3 of a set size centered on a center of the communication portion 103, and the communication portion 103 may have a radius R4 of a set size.

The connection portion 500 may include a first installation hole 510 formed at a lower end portion for installing the positive pressure applying device 600, and a socket portion 520 for inserting and installing a connection frame 530 for connection to an adjacent floating body 10 for a photovoltaic power generation system.

The socket portion 520 may be arranged in plurality at set intervals around the center of the connection portion 500. The socket portions 520 are shown as being installed at four locations spaced 90 degrees apart around the center of the connection portion 500 in FIG. 4, but they are not limited thereto and may be installed fewer than four or more than four locations as needed.

Additionally, the connection portion 500 may include a second installation hole 511 arranged at its upper end portion and communicating with the first installation hole 510 for inserting and installing the positive pressure applying device 600.

The first installation hole 510 may have a smaller diameter than the second installation hole 511 to facilitate positive pressure application to the positive pressure applying device 600.

A cross-sectional shape of the socket portion 520 may have a thickness (t) of a set size and a trapezoidal shape, a quadrilateral shape, a circular shape, or the like, in accordance with a shape of the connection frame 530.

The socket portion 520 may be manufactured by welding or the like using the same metal material as the upper structure 100 and the lower structure 200.

When the cross-sectional shape of the socket portion 520 is a trapezoidal shape or a quadrilateral shape, a bent surface of the socket portion 520 may have a round (Rf) with a curvature of a set size to prevent cracks caused by excessive bending, taking into account cold workability, including an elongation of metal.

Additionally, at least one or more roller portions 550 for supporting a mooring device cable 540 passing through the socket portions 520 may be provided inside the socket portions 520 of the connection portion 500.

A roller support body 551 for supporting the roller portion 550 to allow for arbitrary rotation may be installed on an inner surface of the socket portion 520.

The positive pressure applying device 600 may include an injection pipe 610, a valve cap 620, and a support body 630.

The injection pipe 610 may be installed in communication with the connection portion 103 for injecting gas for positive pressure application.

Additionally, the valve cap 620 may be installed at an upper end portion of the injection pipe 610 to close the injection pipe 610.

The support body 630 may be coupled to the installation portion 101 to support the injection pipe 610.

The positive pressure applying device 600 may be composed of, for example, a snap-in valve and the like. By periodically checking a positive pressure within the positive pressure applying device 600 using the positive pressure applying device 600, a status of the floating body 10 of a photovoltaic power generation system regarding damage and corrosion can be quantitatively monitored, and airtightness can be ensured by applying additional positive pressure.

Air, carbon dioxide ($CO_2$) gas, or the like may be injected into the injection pipe 610 of the positive pressure applying device 600 at a set pressure (e.g., a pressure higher than atmospheric pressure).

In particular, when carbon dioxide is injected into the injection pipe 610 to pressurize the inside of the upper structure 100, a rate of internal corrosion, which may occur due to a reaction between oxygen and chlorine ions in seawater entering through crevice corrosion or the like in the floating body 10 for a photovoltaic power generation system, can be significantly delayed.

In addition, a pressure gauge (not shown) for measuring a pressure inside the injection pipe 610 may be installed in the injection pipe 610, and the pressure gauge may be provided with an alarm unit (not shown) that receives pressure information measured by the pressure gauge and notifies an operator or the like when the measured pressure drops below a set pressure level.

In addition, the floating body 10 for a photovoltaic power generation system may be provided with a platform or passage (not shown) for maintenance and safety inspection of the floating body 10.

As shown in FIG. 7, the upper structure 100 and the lower structure 200 may include a plurality of dimpled portions 120, 220 on surfaces to generate turbulence, respectively.

The dimpled portions 120, 220 may be formed on the surfaces of the upper structure 100 and the lower structure 200 through press working or the like to generate turbulence.

The dimpled portions 120, 220 generate turbulence on the surfaces of the upper structure 100 and the lower structure 200, thereby reducing a wake region generated by ocean currents or ocean winds flowing along the floating body 10 for a photovoltaic power generation system, which can in turn reduce a pressure drag acting on the floating body 10 for a photovoltaic power generation system and minimize attachment of marine organisms.

In addition, a photovoltaic power generation system according to an embodiment of the present invention may include the floating body described above.

Below, with reference to FIGS. 1 to 7, an operation of the floating body for a photovoltaic power generation system according to an embodiment of the present invention will be described.

First, the floating body 10 for a photovoltaic power generation system has an overall spherical shape formed by the upper structure 100 and the lower structure 200.

Accordingly, the incident waves may be allowed to naturally propagate to an inner side beneath a floating offshore photovoltaic power generation system by generating streamlines (transmitted waves) along a surface of the floating body 10 for a photovoltaic power generation system due to low resistance to external forces such as wind load and wave load at sea where it is unknown from which direction the ocean wind will blow or the current will flow.

A resistance force (Fd) acting on the floating body 10 for a photovoltaic power generation system can be expressed by a speed (V) of the wind or current acting on the floating body, a projected cross-sectional area (A) in the direction of the fluid flow, a density ($\rho$) of the fluid, and a drag coefficient (Cd) related to the projected cross-sectional shape of the floating body, as in Equation (1).

$$Fd = \rho AV^2 Cd/2 \text{ ---Equation (1)}$$

Assuming that the projected cross-sectional area (A) in the direction of fluid flow is the same, it is known that the magnitude of the resistance force (Fd) is determined by the drag coefficient (Cd) related to the projected cross-sectional shape of the floating body. For a quadrilateral shape, Cd is 0.82, for a vertical flat plate, Cd is 1.2, for a long cylindrical shape, Cd is 0.82, for a short cylindrical shape, Cd is 1.15, and for a spherical shape, Cd is 0.47.

Therefore, in a comparative example where a floating body having a plate shape, a quadrilateral shape, a conical shape, a cylindrical shape, or the like is used, the drag coefficient varies depending on the direction of the flow of the current, and its value is also larger than that of the spherical shape presented in the embodiment of the present invention.

In addition, since the upper structure 100 has a hemispherical shape convex upward (Y direction of FIG. 1), seawater (water) is allowed to pass smoothly under the influence of external forces.

In addition, the lower structure 200 has a hemispherical shape convex downward (Y direction of FIG. 1) and provides buoyancy, allowing seawater to pass smoothly under the influence of external forces and enabling the upper structure 100 arranged on top of the lower structure 200 to float above the water surface.

In addition, since the upper structure 100 and the lower structure 200 are manufactured through metal press working that plastically deforms a metal plate, they can have excellent corrosion resistance, including strong resistance to surface corrosion and crevice corrosion in a submerged portion of the floating body 10.

The floating body 10 for a photovoltaic power generation system includes the upper flange portion 110 extending outward from the upper structure 100, the lower flange portion 210 extending outward from the lower structure 200, and the fixing portion 300 coupling the upper flange portion 110 and the lower flange portion 210.

In addition, the upper flange portion 110 includes the first upper groove 113 that is convex upward, the lower flange portion 210 includes the first lower groove 213 that is concave downward and arranged to correspond to the first upper groove 113, and the first non-metal airtight pad 400 is arranged between the first upper groove 113 and the first lower groove 213.

In addition, the upper flange portion 110 includes the second upper groove 115 on an outer side of the first upper groove 113, the lower flange portion 210 includes the second lower groove 215 arranged to correspond to the first lower groove 213, and the second non-metal airtight pad 410 is arranged between the second upper groove 115 and the second lower groove 215.

The upper flange portion 110 includes the upper planar portion 117 between the first upper groove 113 and the second upper groove 115, and the lower flange portion 210 includes the lower planar portion 217 arranged to correspond to the upper planar portion 117 between the first lower groove 213 and the second lower groove 215.

Additionally, the third non-metal airtight pad 420 is arranged between the upper planar portion 117 and the lower planar portion 217.

By including the components related to the upper flange portion 110, the lower flange portion 210 and the fixing portion 300 as described above, it is possible to prevent seawater from seeping into the inside of the floating body 10 for a photovoltaic power generation system, which would otherwise cause crevice corrosion and loss of buoyancy.

In addition, since the connection portion 500 is installed on the installation portion 101 of the floating body 10 for a photovoltaic power generation system, one floating body 10 can be connected to another floating body 10 adjacent to the one floating body 10.

That is, the connection frame 530 for connecting one floating body 10 to another adjacent floating body 10 can be inserted and installed by means of the plurality of socket portions 520 arranged at set intervals around the center of the connection portion 500.

The cross-sectional shape of the socket portion 520 may have a thickness (t) of a set size and a trapezoidal shape, a quadrilateral shape, a circular shape, or the like, in accordance with the shape of the connection frame 530.

In addition, since at least one or more roller portions 550 are provided inside the socket portions 520 of the connection portion 500, the mooring device cable 540 passing through the socket portion 520 can be supported.

The central portion of the installation portion 101 includes the communication portion 103 in communication with the internal hollow portion of the upper structure 100, and the communication portion 103 is provided with the positive pressure applying device 600 for applying a positive pressure to the inside of the upper structure 100.

By periodically checking a positive pressure within the positive pressure applying device 600 using the positive pressure applying device 600, a status of the floating body 10 of a photovoltaic power generation system regarding damage and corrosion can be quantitatively monitored, and airtightness can be ensured by applying additional positive pressure.

In particular, when carbon dioxide is injected into the injection pipe 610 to pressurize the inside of the upper structure 100 to a set pressure, a rate of internal corrosion, which may occur due to a reaction between oxygen and chlorine ions in seawater entering through crevice corrosion or the like in the floating body 10 for a photovoltaic power generation system, can be significantly delayed.

The positive pressure applying device 600 applies a gas having a higher pressure than atmospheric pressure to the inside of the upper structure 100, thereby making it easy to variably set the buoyancy of the floating body 10 according to the sea level fluctuations of the sea surface, which differ depending on the installation offshore area, and temperature changes by season, and to fundamentally prevent seawater, which causes crevice corrosion, from seeping into the inside of the floating body 10.

In addition, since the upper structure 100 and the lower structure 200 have the dimpled portions 120, 220 on their surfaces, turbulence can be generated on the surfaces of the upper structure 100 and the lower structure 200.

In this way, by generating turbulence on the surfaces of the upper structure 100 and the lower structure 200 by the dimpled portions 120 and 220, a wake region generated by ocean currents or ocean winds flowing along the floating body 10 for a photovoltaic power generation system can be reduced, and thus, a pressure drag acting on the floating body 10 for a photovoltaic power generation system can be reduced and attachment of marine organisms can be minimized.

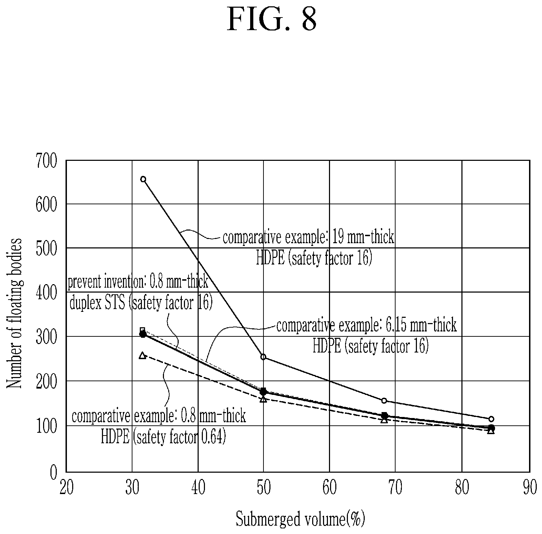

Below, the description is given with reference to FIG. 8. A submersion rate of the floating body, as used below, refers to a ratio of the total volume of the floating body to the volume of the floating body submerged below the sea surface.

FIG. 8 is a graph comparing the number of floating bodies with respect to the submerged volume (submersion rate) of the floating body between a comparative example and an example of the present invention.

FIG. 8 shows a comparison of the number of positive pressure-applied spherical floating bodies of the comparative example, where a high-density polyethylene (HDPE) material is used, and the number of positive pressure-applied spherical floating bodies of the present invention, where a highly corrosion-resistant metal material (duplex stainless steel) is used, depending on the submersion rate of the floating body, when the weight of the photovoltaic panels is 5.56 tons (371 panels) and the weight of the structure is 15 tons in a 0.1 MW floating offshore photovoltaic power generation system.

Additionally, it is assumed that, as external environmental conditions, the seawater temperature is 40°C, and carbon dioxide ($CO_2$) of 1.1 atm, which is higher than atmospheric pressure, is applied to the inside of the floating body, and as the dimensions of the spherical floating body, the radius (Ra) of the sphere is 400 mm and the radial width (R7 - Ra) of the flange outside the sphere is 150 mm (see FIG. 2).

In this case, the number of floating bodies is determined by dividing the total self-weight of the photovoltaic panels and the structure by the net buoyancy (buoyancy - self-weight of the floating body - self-weight of $CO_2$ inside the floating body) that a single floating body should support.

In addition, when the yield strength of the highly corrosion-resistant metal material (duplex stainless steel) used in the present invention is 450 MPa and the yield strength of the high-density polyethylene of the comparative example is 17.8 MPa, the durability of the floating body is estimated from the design safety factor, which is a ratio of the stress generated on the surface of the floating body by the gas pressure inside the floating body to the yield strength of the floating body material.

As shown in FIG. 8, it can be seen that, as the submersion rate of the floating body increases, the net buoyancy increases, so the total number of floating bodies in the floating photovoltaic power generation system decreases.

In addition, assuming that the thickness (t) of the floating body material is 0.8 mm and the submersion rate is low, in the comparative example where the inside of the floating body is filled with foam and the HDPE material is used as the outer material, the number of floating bodies is smaller than that in the present invention due to the relatively lower density of HDPE compared to metal.

However, in this case, it can be seen that the metal floating body according to the embodiment of the present invention has a design safety factor of 16 or higher, whereas in the comparative example, when the thickness (t) of the floating body material is 0.8 mm, the design safety factor is 0.64, indicating that durability is not ensured and failure occurs.

In addition, it can be seen that, when the thickness of the floating body made of the HDPE material of the comparative example is increased to 19 mm so as to ensure the same design safety factor of the comparative example as that of the embodiment of the present invention, a greater number of floating bodies are required compared to the embodiment of the present invention.

Additionally, if the thickness of the HDPE material in the comparative example is determined to make the number of floating bodies similar to that in the embodiment of the present invention, it is 6.15 mm, and the design safety factor in this case is 5. Therefore, it can be seen that the difference in floating bodies used in the comparative example and the embodiment of the present invention is more than three times in terms of durability, even when excluding environmental influences.

In order to ensure a life of 20 years in a marine environment with semi-diurnal tidal cycles, the durability life of the floating body needs to exhibit an almost infinite fatigue life.

To this end, assuming a typhoon, which is the strongest external force in the marine environment [it has been reported that the pressure of a strong typhoon is 951 hectopascals (hPa), the speed of the typhoon is 70 m/s, and the speed of the current is close to 7.4 km/h], the floating body is subject to a dynamic load (pressure and speed of the current or ocean wind) in the direction parallel to the sea surface, in addition to a static load related to its own weight in the vertical direction.

In typical cases, at over 106 cycles (>20 years) known as a cyclic life corresponding to an infinite life, when the thickness of the floating body material according to the present invention is 0.8 mm, the allowable strength of the metal floating body is 219 MPa, considering the tensile strength of the material of 620 MPa, the metal surface processing method applied during sphere fabrication, load conditions (tension, compression, torsion), and the operating environment such as operating temperature conditions, and the dynamic load safety factor is 9 or higher regardless of the submersion rate of the floating body.

In this case, the dynamic load safety factor is a value obtained by dividing the sum of the submerged part resistance in water due to the current and the non-submerged part resistance due to the typhoon y the allowable force, which is calculated based on the allowable strength, floating body thickness, floating body radius, and the like.

For the 6.15 mm-thick HDPE spherical floating body of a comparative example shown in FIG. 8, the dynamic load safety factor is 2.83. Therefore, it can be seen that the difference in floating bodies used in the comparative example and the embodiment of the present invention is more than three times in terms of long-term service life safety, even when excluding environmental influences.

If, in the comparative example, a quadrilateral floating body is used instead of the spherical floating body according to the embodiment of the present invention, the dynamic load safety factor of the comparative example may be reduced due to the difference in the drag coefficient, which is an index of resistance to fluid energy.

Although the present disclosure has been described in connection with what is presently considered to be practical exemplary embodiments, one skilled in the art would appreciate that the present invention is not limited thereto and various modifications and variations can be made without departing from the scope of the claims described below.

**<Description of symbols>**

10: floating body for photovoltaic power generation system
100: upper structure
101: installation portion
200: lower structure
300: fixing portion

**Claims**

1. A floating body for a photovoltaic power generation system comprising:

    an upper structure comprising an installation portion having a flat shape on one side;
    a lower structure arranged to correspond to the upper structure and comprising a hemispherical shape convex in a direction away from the installation portion; and
    a fixing portion configured to couple the upper structure and the lower structure.

2. The floating body for a photovoltaic power generation system of claim 1, wherein:
the upper structure has one of a hemispherical shape, a semi-conical shape, or a semi-ellipsoidal shape.

3. The floating body for a photovoltaic power generation system of claim 1 or claim 2, comprising:

    an upper flange portion extending in an outward direction of the upper structure, and
    a lower flange portion arranged to correspond to the upper flange portion and extending in an outward direction of the lower structure.

4. The floating body for a photovoltaic power generation system of any one of claim 1 to claim 3, wherein:
the fixing portion couples the upper structure and the lower structure by a screw or welding or couples the upper flange portion and the lower flange portion by a bolt or welding.

5. The floating body for a photovoltaic power generation system of any one of claim 1 to claim 4, wherein:

the upper flange portion comprises a first upper groove, and
the lower flange portion comprises a first lower groove arranged to correspond to the first upper groove.

6. The floating body for a photovoltaic power generation system of any one of claim 1 to claim 5, wherein: a first non-metal airtight pad is arranged between the first upper groove and the first lower groove.

7. The floating body for a photovoltaic power generation system of any one of claim 1 to claim 6, wherein:

the upper flange portion comprises at least one or more second upper grooves on an outer side of the first upper groove, and
the lower flange portion comprises a second lower groove arranged to correspond to the second upper groove.

8. The floating body for a photovoltaic power generation system of any one of claim 1 to claim 7, wherein: a second non-metal airtight pad is arranged between the second upper groove and the second lower groove.

9. The floating body for a photovoltaic power generation system of any one of claim 1 to claim 8, wherein:

the upper flange portion comprises an upper planar portion between the first upper groove and the second upper groove, and
the lower flange portion comprises a lower planar portion arranged to correspond to the upper planar portion between the first lower groove and the second lower groove.

10. The floating body for a photovoltaic power generation system of any one of claim 1 to claim 9, wherein: a third non-metal airtight pad is arranged between the upper planar portion and the lower planar portion.

11. The floating body for a photovoltaic power generation system of any one of claim 1 to claim 10, wherein: materials of the first non-metal airtight pad, the second non-metal airtight pad, and the third non-metal airtight pad are composed of silicone.

12. The floating body for a photovoltaic power generation system of any one of claim 1 to claim 11, wherein: the installation portion is provided with a connection portion for connecting one floating body and another floating body adjacent to the one floating body.

13. The floating body for a photovoltaic power generation system of any one of claim 1 to claim 12, wherein:

the installation portion comprises a communication portion configured to communicate with an internal hollow portion of the upper structure, and
the communication portion is provided with a positive pressure applying device for applying a positive pressure to an inside of the upper structure.

14. The floating body for a photovoltaic power generation system of any one of claim 1 to claim 13, wherein:

the connection portion comprises
a first installation hole for installing the positive pressure applying device, and
a socket portion for installing a connection frame for connection to an adjacent floating body for a photovoltaic power generation system.

15. The floating body for a photovoltaic power generation system of any one of claim 1 to claim 14, wherein: the socket portion is arranged in plurality at intervals set based on the connection portion.

16. The floating body for a photovoltaic power generation system of any one of claim 1 to claim 15, wherein: a cross-sectional shape of each of the socket portions has a trapezoidal shape.

17. The floating body for a photovoltaic power generation system of any one of claim 1 to claim 16, wherein: at least one or more roller portions are installed inside the socket portions to support a mooring device cable passing through the socket portions.

18. The floating body for a photovoltaic power generation system of any one of claim 1 to claim 17, wherein:

the positive pressure applying device comprises an injection pipe connected in communication with the communication portion for injecting a gas for positive pressure application,
a valve cap installed on the injection pipe for closing the injection pipe, and
a support body coupled to the installation portion to support the injection pipe.

19. The floating body for a photovoltaic power generation system of any one of claim 1 to claim 18, wherein: an air or carbon dioxide ($CO_2$) gas is injected into the injection pipe at a set pressure.

**20.** The floating body for a photovoltaic power generation system of any one of claim 1 to claim 19, wherein: the upper structure and the lower structure are manufactured from a metal material.

**21.** The floating body for a photovoltaic power generation system of any one of claim 1 to claim 20, wherein: the metal material is any one material selected from austenitic stainless steel, ferritic stainless steel, or duplex stainless steel.

**22.** The floating body for a photovoltaic power generation system of any one of claim 1 to claim 21, wherein: the upper structure and the lower structure each comprise a dimpled portion on a surface.

**23.** The floating body for a photovoltaic power generation system of any one of claim 1 to claim 22, wherein: a height of each of the upper structure and the lower structure is set smaller than a radius of each of the upper structure and the lower structure.

**24.** The floating body for a photovoltaic power generation system of any one of claim 1 to claim 23, wherein: the socket portion is manufactured from the same metal material as the upper structure and lower structure.

**25.** A photovoltaic power generation system comprising the floating body of any one of claims 1 to 24.

# FIG. 1

# FIG. 2

# FIG. 3

(a)

(b)

# FIG. 4

# FIG. 5

(a)

(b)

(c)

# FIG. 6

## FIG. 7

# FIG. 8

## INTERNATIONAL SEARCH REPORT

| International application No. |
|---|
| **PCT/KR2023/010981** |

| | |
|---|---|
| **A.** | **CLASSIFICATION OF SUBJECT MATTER** |

**B63B 35/44**(2006.01)i; **B63B 75/00**(2020.01)i; **H02S 10/40**(2014.01)i

According to International Patent Classification (IPC) or to both national classification and IPC

| | |
|---|---|
| **B.** | **FIELDS SEARCHED** |

Minimum documentation searched (classification system followed by classification symbols)

B63B 35/44(2006.01); B29C 65/00(2006.01); B63B 35/34(2006.01); B63B 43/12(2006.01); H01L 31/042(2006.01); H02S 10/40(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 플랜지(flange), 부유체(float), 가스(gas), 공기(air), 볼트(bolt), 소켓(socket)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | KR 10-2021-0148558 A (SEMI CO., LTD.) 08 December 2021 (2021-12-08)<br>See paragraphs [0002]-[0004] and [0043]-[0049] and figures 5-7. | 1-2,23,25 |
| Y | | 3-22,24 |
| Y | KR 10-2019-0054781 A (KOBUI TECH CO., LTD.) 22 May 2019 (2019-05-22)<br>See paragraphs [0021]-[0028] and figures 1-2. | 3-11 |
| Y | JP 2019-024302 A (XU, Yen-Ming) 14 February 2019 (2019-02-14)<br>See paragraphs [0012] and [0019]-[0020], claims 2-4 and figures 1A-3. | 5-11,20-22 |
| Y | US 2020-0343850 A1 (LS ELECTRIC CO., LTD.) 29 October 2020 (2020-10-29)<br>See paragraph [0109] and figure 14. | 12-19,24 |
| Y | JP 07-054074 Y2 (ISHIKAWAJIMA HARIMA HEAVY INDUSTRIES CO., LTD.) 13 December 1995 (1995-12-13)<br>See claim 1 and figure 1. | 13-19,24 |

☑ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 October 2023** | **27 October 2023** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/010981** |

| C. | DOCUMENTS CONSIDERED TO BE RELEVANT | |
| --- | --- | --- |
| Category* | Citation of document, with indication, where appropriate, of the relevant passages | Relevant to claim No. |
| Y | KR 10-2015-0037110 A (JOO, Hyong Joong) 08 April 2015 (2015-04-08)<br>See paragraphs [0042]-[0047] and figures 2a-3. | 17 |

Form PCT/ISA/210 (second sheet) (July 2022)

EP 4 610 158 A1

## INTERNATIONAL SEARCH REPORT
### Information on patent family members

International application No.

**PCT/KR2023/010981**

| Patent document cited in search report | | | Publication date (day/month/year) | Patent family member(s) | | | Publication date (day/month/year) |
|---|---|---|---|---|---|---|---|
| KR | 10-2021-0148558 | A | 08 December 2021 | None | | | |
| KR | 10-2019-0054781 | A | 22 May 2019 | None | | | |
| JP | 2019-024302 | A | 14 February 2019 | CN | 109217781 | A | 15 January 2019 |
| | | | | TW | 201907128 | A | 16 February 2019 |
| | | | | TW | I696797 | B | 21 June 2020 |
| US | 2020-0343850 | A1 | 29 October 2020 | CN | 111418149 | A | 14 July 2020 |
| | | | | KR | 10-1937210 | B1 | 10 January 2019 |
| | | | | KR | 10-1961662 | B1 | 26 March 2019 |
| | | | | WO | 2019-107793 | A1 | 06 June 2019 |
| JP | 07-054074 | Y2 | 13 December 1995 | JP | 01-123797 | U | 23 August 1989 |
| KR | 10-2015-0037110 | A | 08 April 2015 | None | | | |

Form PCT/ISA/210 (patent family annex) (July 2022)